# EUROPEAN PATENT SPECIFICATION

(11) **EP 4 006 555 B1**
(45) Date of publication and mention of the grant of the patent: **25.11.2026**
(21) Application number: 20843460.5
(22) Date of filing: 11.03.2020
(51) Int. Cl.: G01N 35/02, G01N 35/04

(54) **SPECIMEN CONVEYANCE SYSTEM**
PROBENFÖRDERSYSTEM
SYSTÈME DE TRANSPORT D'ÉCHANTILLONS

(30) Priority: 24.07.2019 JP 2019136004
(43) Date of publication of application: 01.06.2022
(73) Proprietor: Hitachi High-Tech Corporation, Minato-ku Tokyo 105-6409 (JP)
(72) Inventor: YANO, Shigeru, Tokyo 105-6409 (JP); MATSUKA, Takeshi, Tokyo 105-6409 (JP); HAMANO, Satohiro, Tokyo 105-6409 (JP)
(74) Representative: Strehl & Partner mbB
(86) International application number: PCT/JP2020/010627
(87) International publication number: WO 2021/014676

(56) References cited:
- EP-A1- 2 570 814
- WO-A1-2013/177163
- WO-A1-2017/163616
- JP-A- 2003 121 451
- JP-A- 2011 242 154
- JP-A- 2016 138 811
- JP-A- 2016 156 677
- JP-A- 2016 218 060
- JP-A- 2018 017 606
- JP-A- 2018 169 283

## Description

### Technical Field

The present invention relates to a sample transport system suitable for a clinical laboratory automation system that handles vessels such as sample tubes containing a specimen and more particularly to a sample transport system that efficiently utilizes a sample transport path using transport units movable two-dimensionally in a plane.

### Background Art

As one example of the method for operating a research laboratory sample distribution system, Patent Literature 1 describes a research laboratory sample distribution system in which a sample vessel carrier holds one or more sample vessels, the sample vessel contains the sample to be analyzed by a specified number of research laboratory stations, a transport surface is provided and structured to support the sample vessel carrier, a specified number of transport positions are arranged on the transport surface and the transport positions are assigned to the corresponding research laboratory stations.

### Citation List

### Patent Literature

Patent Literature 1: Japanese Patent Application Laid-Open No. 2016-218060 Further, EP 2570814 A1 discloses a sample transport system from which the pre-characterizing part of claim 1 starts out. Related art is disclosed in WO 2013/177163 A1.

### Summary of Invention

### Technical Problem

In clinical inspection, an automatic analyzer that includes modules for performing pre-anlytical processes such as centrifugation, uncapping and dispensing for a sample tube containing a biological sample collected from a human body such as blood or urine (hereinafter referred to as a specimen) has the function to mount the sample tube containing the specimen on a carrier such as a rack or holder in order to perform various processes sequentially and transport it to the relevant processing sections.

On a transport path to transport these, generally the carrier is moved in forward and backward directions onedimensionally so that the carrier is transported physically with stability.

Therefore, vessels that contain various specimens, including not only a normal sample to be processed in a normal time period, but also a STAT sample from an emergent treatment room or operating room, a sample under processing for which other various processes have been finished and a processed sample, are transported on a one-dimensional transport path.

In this kind of system, in order to handle an STAT sample, usually a transport path for STAT samples is provided apart from a line for normal samples. In addition, by providing a transport path to connect the transport of a normal sample and that of a STAT sample at a specific spot, the STAT sample can overtake the normal sample so that the STAT sample can be preferentially processed and transported. Furthermore, two or more one-dimensional paths may be combined so that the normal sample stands by temporarily.

On the other hand, unlike a one-dimensional transport path which is physically fixed, a transport unit that enables two-dimensional movement in a plane has a feature that a transport path can be logically made on the transport surface forming the upper surface of the transport unit.

The technique described in Patent Literature 1 is one aspect of this technique. In this technique, electromagnetic coils are installed on the lower surface of the transport surface and an electric current is supplied to these electromagnetic coils successively to move the holder with a magnet that is placed on the transport surface.

Here, in order to transport along each position on a transport path in one vertical or horizontal direction, it is necessary to check whether or not another holder is present on the positions that constitute the transport path. For this reason, the transport unit incorporates a sensor and has a memory area that stores its condition at the same time.

In a sample transport system that adopts a sample transport path using a transport surface to enable planar two-dimensional movement instead of a transport path system as a combination of one-dimensional transport paths, like the one in Patent Literature 1, a management section that manages the whole system including all the transport surfaces makes a concrete transport path.

In this case, there is a problem that when the system is larger, the management section must handle a larger amount of information and the total amount of information including the route definition information required to determine a transport path and holder position information is larger, resulting in a larger load on the communication system. Even if the system is small, there is also a problem that a burden is put on the management section itself.

Therefore, there is a demand for an information holding method that reduces the amount of information including the route definition information required to determine a transport path and the holder position information and does not put a burden on the communication system.

The object of the present invention is to provide a sample transport system that reduces the load on the communication system as compared with the prior art.

### Solution to Problem

The above problem is solved by a sample transport system as set forth in the appended claims.

### Advantageous Effects of Invention

According to the present invention, the load on the communication system can be reduced as compared with the prior art. Other issues, elements and effects will become apparent from the description of embodiments given below.

### Brief Description of Drawings

FIG. 1 is a view showing an outline of an automatic analysis system provided with a sample transport system of a first embodiment of the present invention and one example of a layout of the sample transfer system.
FIG. 2 is a view showing one example of a system configuration for generating destination information of a transport tile in the sample transport system of the first embodiment.
FIG. 3 is a view showing one example of an internal structure of a sample situation memory in the sample transport system of the first embodiment.
FIG. 4 is a view showing one example of an internal structure of route definition information in the sample transport system of the first embodiment.
FIG. 5 is a view showing the internal structure of the route definition information in the sample transport system of the first embodiment and one example of use.
FIG. 6 is a view showing one example of use of the transport tile in the sample transport system of the first embodiment.
FIG. 7 is a processing flow at the time of changing route definition information in a sample transport system of a third embodiment of the present invention.

### Description of Embodiments

Next, a sample transport system according to embodiments of the present invention will be described referring to drawings.

### First Embodiment

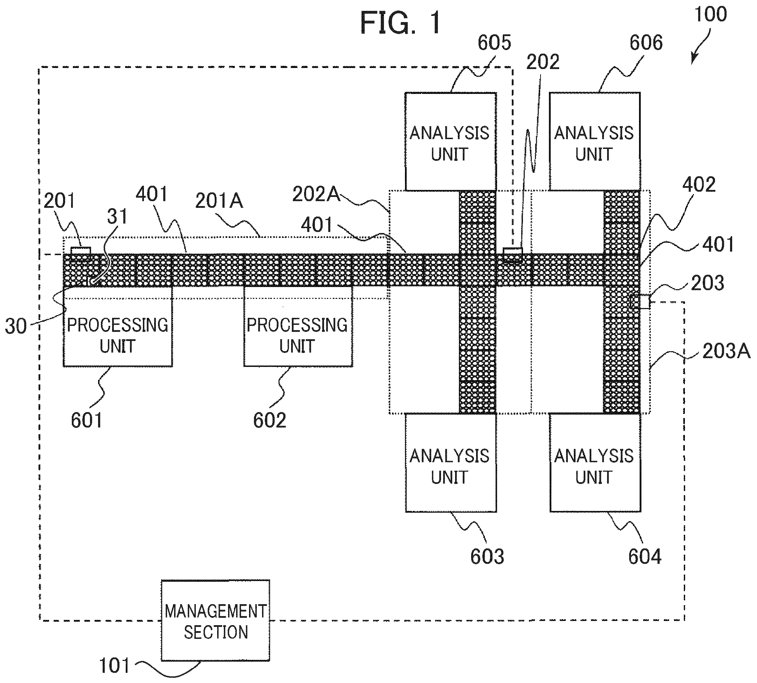

A sample transport system according to the first embodiment of the present invention will be described referring to FIG. 1 to FIG. 6.

First, the whole automatic analysis system including the sample transport system will be described referring to FIG. 1. FIG. 1 is a view showing an outline of an automatic analysis system provided with a sample transport system and one example of layout of the sample transport system.

The sample transport system 100 shown in FIG. 1 is a system to transport a holder 30 carrying a sample tube 31 containing a specimen such as blood or urine to preprocessing modules 601 and 602 having a sample input unit for input, a centrifugal separation unit for making a serum component required for inspection, and an uncapping unit for removing a vessel cap, and automatic analysis modules 603, 604, 605, and 606 and recover the holder 30.

The sample transport system 100 shown in FIG. 1 includes at least two transport tiles 401 capable of moving the holder 30 in a two-dimensional direction in a plane, control sections 201, 202, and 203 for managing action of the transport tiles 401, and a management section 101 for integrally managing the sample transport system 100.

In the sample transport system 100, a plurality of transport tiles 401 movable two-dimensionally in a plane make connection between the preprocessing modules 601 and 602 and between these modules and a plurality of automatic analysis modules 603, 604, 605, and 606.

Consequently, the sample tube 31 put in from the preprocessing module 601 having the sample input unit is transported to the prescribed preprocessing module 602 thorough the transport tiles 401 and then transported to the automatic analysis modules 603, 604, 605, and 606 through the transport tiles 401.

In order to transport the sample tube 31 containing a specimen, the sample transport system 100 includes a plurality of carriers. The carriers each have a magnetic body such as a permanent magnet on their bottom side, namely on their transport tile 401 side surface and each carrier is structured to hold one or more sample tubes 31. FIG. 1 illustrates a case that the holder 30 to hold one sample tube 31 containing a specimen is the object to be transported. However, the invention is not limited thereto and instead of the holder 30 to hold one sample tube 31, a specimen rack to hold a plurality of sample tubes 31 can be used as a carrier.

The transport tiles 401 have a tile-like shape and are positioned two-dimensionally in a plane so that a plurality of holders 30 can stand by. The transport tiles 401 are structured so that the whole sample transport system 100 makes a flat plane to support and transport the holder 30.

One transport tile 401 includes: an electromagnetic coil 402 comprised of a core and a winding around the core; a drive circuit for supplying an electric current to the electromagnetic coil 402; and a sensor for detecting whether or not there is a holder just above it, and includes a plurality of these coils, drive circuits and sensors. FIG. 1 shows a case that one transport tile 401 has 36 (6 × 6) electromagnetic coils 402, though the number of electromagnetic coils is not limited to that number.

Usually, the transport tiles 401 have a transport surface (not shown) to support the holder 30 between the electromagnetic coils 402 and the holder 30. As the electromagnetic coils 402 under the transport surface are successively electrified, the holder 30 with a magnetic body that is placed on the transport surface moves in a sliding manner.

Details of the sensor for detecting the holder 30 are not limited. For example, it may be a Hall sensor that detects the magnetic flux of the magnetic body attached to the bottom of the holder 30, or a length measuring device or camera. Furthermore, another method may be used.

The management section 101 controls operation of the whole sample transport system including the sample transport system 100, preprocessing modules 601 and 602 and automatic analysis modules 603, 604, 605, and 606. It is a computer that includes a display device such as a liquid crystal display, an input device, a storage unit, a CPU, and a memory.

The management section 101 also controls various actions of the above modules and so on.

The various devices are controlled by the management section 101 according to the various programs stored in the storage unit.

Processing for operation control by the management section 101 may be performed according to a single program or a plurality of programs or a combination of programs. Part or all of a program may be implemented by dedicated hardware or in the form of a module.

Although FIG. 1 illustrates a specimen analysis system that includes two preprocessing modules and four automatic analysis modules, the number of preprocessing modules and the number of automatic analysis modules are not limited and the system should include at least two modules of any of these types. In addition, a single or additional postprocessing module may be provided.

Details of the preprocessing module structure are also not limited and a known preprocessing device structure may be adopted. If two ore more preprocessing modules are provided, they may have the same specification or different specifications and their specifications are not limited.

The same is true for the automatic analysis modules. A known automatic analyzer that performs analysis for biochemical items and immunological items may be adopted. If two or more automatic analyzers are provided, they may have the same specification or different specifications and their specifications are not limited.

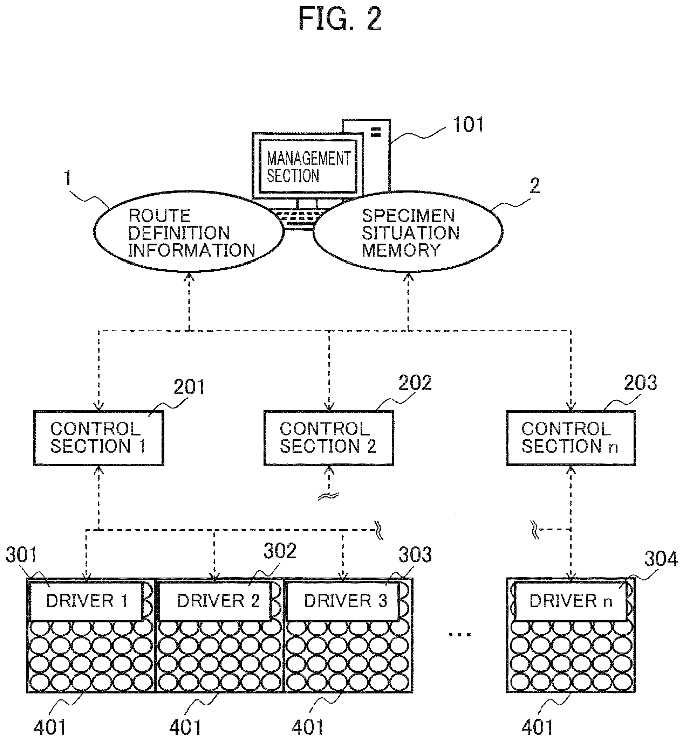

Here, destination information is required for the holder 30 to move on a transport tile 401 or between transport tiles 401. Next, the configuration of the sample transport system to generate destination information will be explained referring to FIG. 2 to FIG. 6.

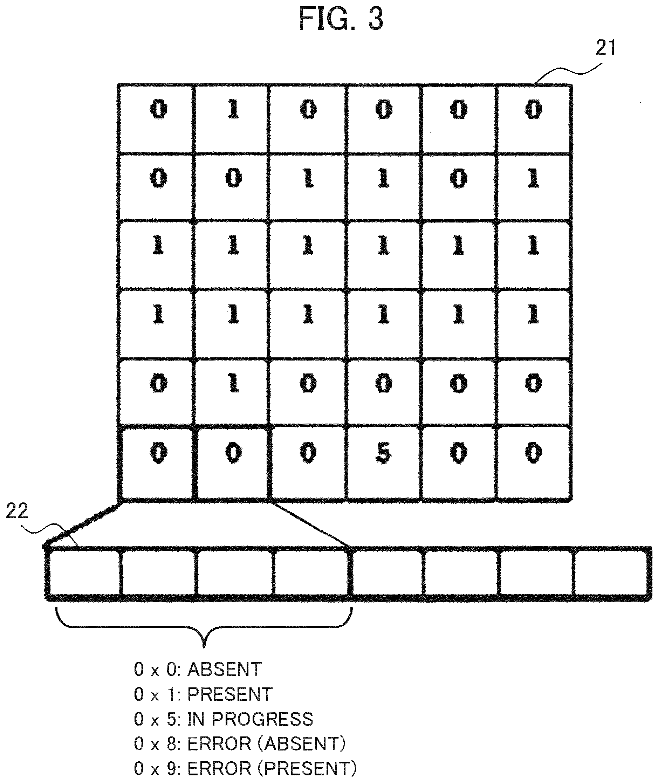

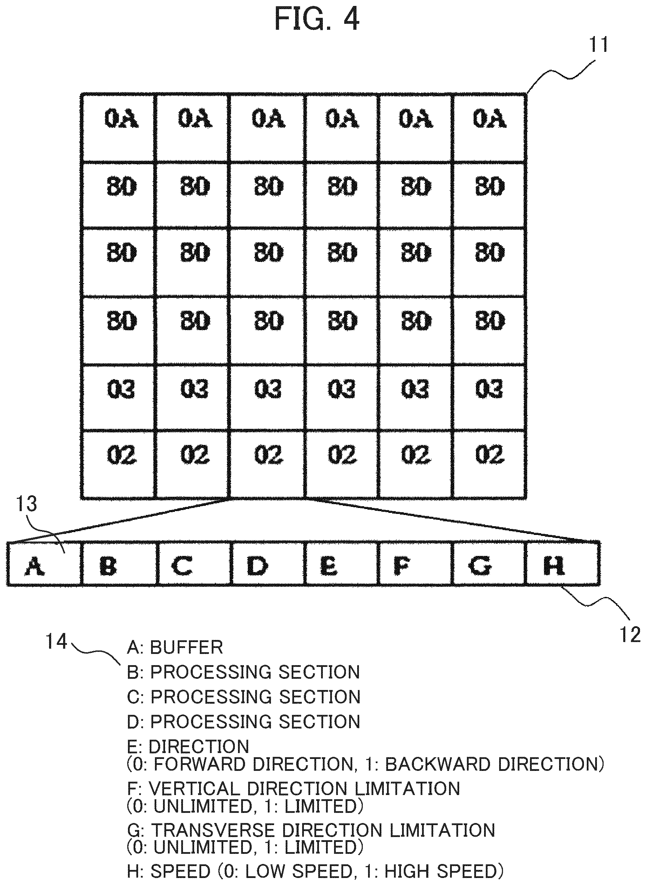

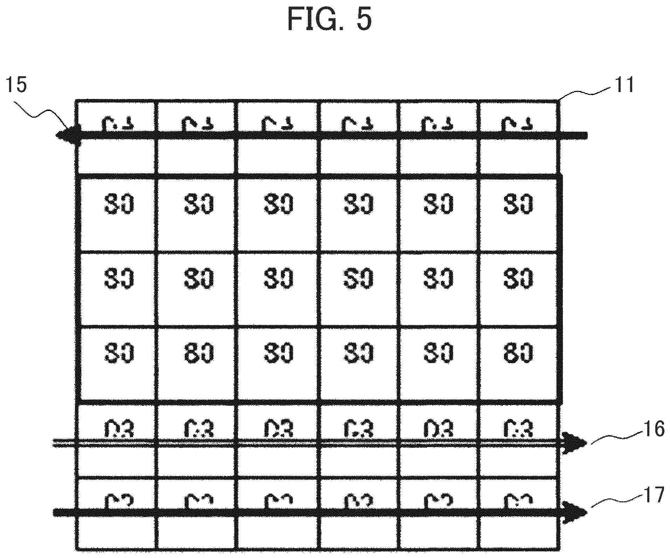

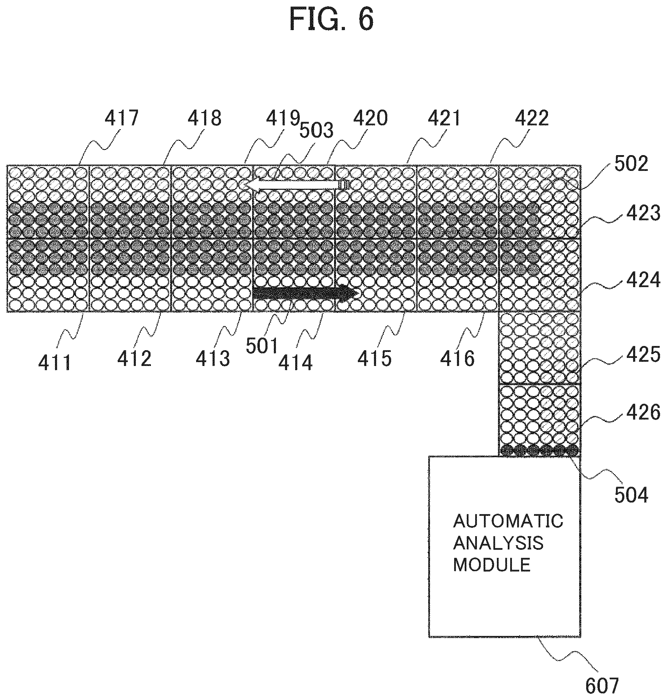

FIG. 2 is a view showing one example of the system configuration for generating destination information of a transport tile in the sample transport system in this embodiment. FIG. 3 is a view showing one example of the internal structure of a sample situation memory, FIG. 4 is a view showing one example of the internal structure of route definition information, FIG. 5 is a view showing the internal structure of the route definition information and one example of use, and FIG. 6 is a view showing one example of use of the transport tiles.

First, the system configuration will be explained referring to FIG. 2.

As shown in FIG. 2, the transport tiles 401 have control drivers 301, 302, 303, and 304 that control transport actions of the corresponding transport tiles 401 and perform processing for sensing the holder 30 on the transport tiles 401.

In this embodiment, as shown in FIG. 2, the control drivers 301, 302, and 303 are connected to one control section 201 and the control section 201 gives a drive command for each position to the control drivers 301, 302, and 303. In addition, the control section 201 receives driving results, driving situation information, and sensing information of the holder 30 in the stopped state from the control drivers 301, 302, and 303, and outputs it to the management section 101.

Furthermore, each of the control sections 201, 202, and 203 in this embodiment is connected to a plurality of transport tiles 401 and controls the transport tiles 401. For example, as shown in FIG. 1, cover area 201A of the control section 201 and cover area 203A of the control section 203 each include nine transport tiles in FIG. 1 of the sample transport system 100 and cover area 202A of the control section 202 includes ten transport tiles in FIG. 1 of the sample transport system 100. However, the number of transport tiles 401 to be controlled is not limited.

For example, the maximum number of control drivers that can be connected to one control section 201, namely the total number of transport tiles 401, is 64. However, in configuring the system, the number may be varied depending on the CPU performance, system price, processing speed and other factors.

For the convenience of illustration, FIG. 2 shows that the three transport tiles 401 of the control drivers 301, 302, and 303 are connected to the control section 201.

Furthermore, in this embodiment, as shown in FIG. 1 and FIG. 2, all the control sections 201, 202, and 203 are connected to the management section 101 and each of the control sections 201, 202, and 203 registers the position and status of the holder 30 in the sample situation memory 2 of the management section 101 according to the sensing information from the relevant control driver 301, 302, 303 or 304.

The management section 101 can know which spot is congested in the sample transport system 100, by referring to the sample situation memory 2. After that, the management section 101 can define (generate) route definition information 1 for the holder 30 in consideration of the congested spot known from the sample situation memory 2. The management section 101 outputs the defined transport route information to the control sections 201, 202, and 203.

The control sections 201, 202, and 203, which have received the transport route information, calculate which positions (route) to be used by the holder 30, in consideration of the situation in the transport tiles 401 in the area under their control and give an instruction to the relevant control drivers 301, 302, 303, and 304 to transport the holder 30.

Each of the control sections 201, 202, and 203 manages a plurality of corresponding transport tiles 401. It is desirable to notify the management section 101 of the situation of all the transport tiles 401 under the control by the control sections 201, 202, and 203, for example, in cycles of 3 seconds, rather than notifying the management section 101 of the situation each time the situation of one position on the transport tiles 401 has changed.

FIG. 3 is a conceptual diagram that shows the internal structure of sample situation 21 in the sample situation memory 2 for one transport tile 401 and shows the situation of each position of one transport tile 401.

The sample situation memory 2 exists on the storage unit, such as a memory or hard disk drive, in the management section 101. As shown in FIG. 3, if a transport tile 401 has, for example, 36 positions, each position is expressed by 4-bit string information. One byte expresses the sample situation 22 for two positions, and the sample situation for one transport tile is expressed by 18 bytes.

For example, "0 × 0" can mean that the holder 30 is absent; "0 × 1" can mean that the holder 30 is present above it; "0 × 5" can mean that processing by the adjacent preprocessing module or analysis module is in progress; "0 × 8" can mean an error (holder 30 is absent); and "0 × 9" can mean an error (holder 30 is present).

Here, if the control section 20 controls twenty transport tiles 401, the data indicating the situation of the transport tiles 401 that is exchanged between the control section 201 and the management section 101 is telegram data, the amount of which is as follows:$20 transport tiles \times 18 bytes = 360 bytes$

The amount of this telegram data is not more than one half that of cleartext data as a communication text.

The update cycle of the sample situation memory 2 is determined depending on the processing speed of the sample transport system 100. Specifically, if the transport capability is 1,200 carriers/hour, the update cycle of 3 seconds is enough because 3,600 seconds ÷ 1,200 carriers = 3 seconds. However, if the transport capability is 1,800 carriers/hour, updating in cycles of 2 seconds is needed. Therefore, it is desirable that the cycle of the control section 201 notifying the management section 101 of the sample situation should be variable.

FIG. 4 shows the internal structure of route definition information 11 for one transport tile 401 in the route definition information 1. This is generated by the CPU of the management section 101 referring to the sample situation memory 2 and exists on the storage unit such as a memory or hard disk drive.

Each of the control sections 201, 202, and 203 refers to the route definition information 1 at startup or at the time of resetting and determines the purpose of use of each transport tile 401. The transport definition information of one position is expressed by one byte (route definition information of one position 12) and as indicated by meaning 14 of one definition column 13 of route information definition, definitions are made with respect to the buffer, processing sections, direction, speed, and whether to limit or not in the vertical and transverse directions.

For example, as shown in FIG. 4, when used for a purpose other than a transport path, buffer and processing sections are specified by A, B, C, and D bits in the meaning 14 of definition column of route information definition. For example, these are used to stop the holder in order to perform processing such as dispensing into an adjacent processing section.

In addition, for the transport tiles to enable two-dimensional transport, in order to define intersection of transport paths and moving directions in a buffer area, not only E direction in the meaning 14 of definition column of route information definition, but also F and G (whether to limit or not in vertical and transverse directions) in the meaning 14 of definition column of route information definition can be specified.

Furthermore, H in the meaning 14 of definition column of route information definition can be used for definition to enable transport at high or low speed by changing the electric current to electrify the electromagnetic coils 402 in the electromagnetic method.

Fig. 5 is a diagram which represents the moving directions based on the definition in FIG. 4.

The transport path 17 shown in FIG. 5 transports the holder 30 at low speed rightward in FIG. 5 and the transport path 16 transports the holder 30 at high speed rightward in FIG. 5. FIG. 5 is a conceptual diagram illustrating that the transport path 16 and transport path 17 transport the holder 30 from the upstream of the system to the downstream.

On the other hand, the transport path 15 transports the holder 30 at low speed leftward in FIG. 5 and transports it from the downstream of the system to the upstream.

In addition, the transport paths 15, 16, and 17 can transport it only in the transverse direction.

FIG. 5 also illustrates that the second, third, and fourth rows from top in FIG. 5 are used as a buffer.

Next, FIG. 6 shows an image of transport in the sample transport system 100 that is constituted by combining a plurality of transport tiles 411, 412, 413, 414, 415, 416, 417, 418, 419, 420, 421, 422, 423, 424, 425, and 426 and generated according to another example of route definition.

The transport tiles 411 to 426 in FIG. 6 are the same as the abovementioned tiles 401 in specification.

The transport route area 501 represents a transport path for forward transport from left to right in FIG. 6 and the transport route area 503 represents a transport path for backward transport from right to left in FIG. 6.

The buffer definition area 502 is located in the center of FIG. 6 and used as a buffer for the holder 30.

The processing section definition area 504 is an area which functions as an interface with the analysis module 607 in the right bottom of FIG. 6.

Next, the effects of this embodiment will be explained.

In the above sample transport system 100 according to the first embodiment of the present invention, the management section 101 generates transport route information to transport the holder 30 on the basis of the situation of transport tiles 401 that has been detected by the control drivers 301, 302, 303, and 304, and the control sections 201, 202, and 203 generate a transport route of the holder 30 on the basis of the transport route information, generates a command signal to the transport tiles 401 and outputs it to the control drivers 301, 302, 303, and 304.

Consequently, the information exchanged between the management section 101 and the control sections 201, 202, and 203 for controlling a plurality of transport tiles 401 is not concrete transport route information for the holder 30 but merely rough information concerning the destination. This makes the load on the communication system smaller than before, so high transport efficiency can be achieved. In addition, the following advantageous effects are produced: the management section 101, responsible for integrated management, need not generate concrete route information and thus the load on the management section 101 itself can be smaller than before, thereby suppressing the need for higher performance of the management section 101.

In addition, since the update cycle of the situation of the holder 30 that is managed by the management section 101 is determined depending on the transport capability of the sample transport system 100, the position information of the holder 30 is prevented from being exchanged each time the holder 30 moves and thus the updating frequency can be decreased as compared with the prior art. Therefore, the load on the communication system can be reduced.

Furthermore, the transport route information includes not only route information to carry in, or out of, at least one of the preprocessing modules 601 and 602 and automatic analysis modules 603, 604, 605, and 606, but also route information for low speed or stop to perform processing of the sample tube 31 by at least one of the preprocessing modules 601 and 602 and automatic analysis modules 603, 604, 605, and 606, so a variety of transport situations for the holder 30 can be produced and thus more flexible transport can be realized by the whole system.

### Second Embodiment

The sample transport system according to the second embodiment of the present invention will be described. The same elements as in the first embodiment are designated by the same reference signs and their description is omitted. The same is true for the embodiments described below.

For the sample that has been put into the above sample transport system 100, the transport route to the required preprocessing modules 601 and 602 and the transport route to the automatic analysis modules 603, 604, 605, and 606 are determined according to the inspection item for which measurement should be made, namely the requested inspection item.

In connection with the transport route information generated by the management section 101, when the scale of the sample transport system 100 is larger, the number of the automatic analysis modules 603, 604, 605, and 606 to operate asynchronously is larger, which might cause unexpected congestion to occur partially.

In addition, when the scale of the sample transport system 100 is larger, even in the system in which the management section 101 checks the situation of all the transport tiles 401 to generate a route, the burden on the management section 101 would tend to increase and reduction in the load would be needed.

Therefore, in determining the transport route, it is desirable, for example, that the management section 101 should determine the degree of congestion of holders 30 on the basis of the congestion condition of transport tiles 401 that has been detected by the control drivers 301, 302, 303, and 304 and recorded in the sample situation memory 2 and correct the transport route so as to achieve the shortest time.

For example, if, as the default route definition as shown in FIG. 6, the route is defined so that, in the transport tile 426 to be connected to the analysis module 607, three rows are used in the forward direction and three rows are used in the backward direction and the processing speed of the analysis module 607 is far lower than the transport capability of the sample transport system 100, when the number of specimens to be measured by the analysis module 607 is increased, the holders 30 would accumulate on the transport tiles 426, 425, and 424 in the forward direction, thereby hampering transport from the transport tile 416 to the transport tile 424.

Therefore, if the management section 101 judges that many specimens must be measured by the analysis module 607, it can change the transport route definition to a definition that, in the transport tiles 426, 425, and 424 to be connected to the analysis module 607, five rows are in the forward direction and one row is used in the backward direction so that the congestion before the analysis module 607 is alleviated.

In addition, if, in the sample transport system 100, a plurality of modules of identical specification configuration exist among the preprocessing modules 601 and 602 and the automatic analysis modules 603, 604, 605, and 606, it is desirable for the management section 101 to indicate the transport route information by treating the modules not as individual modules but as a module group as a group of modules of identical specification, instead of indicating the positions on the transport tiles 401.

For example, the destination information may include a preprocessing module group as a group of identical processing modules, in addition to or instead of preprocessing modules required for processing. Also, the destination information may include an analysis module or an analysis module group as a plurality of analysis modules that can make measurements for the same inspection.

The control sections 201, 202, and 203, which have received the destination information based on such group management, calculates which positions are used to make a route for the holder 30, in consideration of the situation in the transport tiles 401 that are managed by the control sections 201, 202, and 203, and send a command to the relevant control drivers 301, 302, 303, and 304.

When the control sections 201, 202, and 203 calculate a route, they refer to the route information in FIG. 4 and if two or more transport paths can be defined, the control section 201 determines the transport route according to the information on presence/absence of the holder 30 based on the latest sensing information.

The other elements and actions are almost the same as in the first embodiment and details thereof are omitted.

The sample transport system according to the second embodiment of the present invention also produces almost the same advantageous effects as the above sample transport system according to the first embodiment.

In addition, the management section 101 can change the route in order to resolve the bottlenecks for a STAT sample's overtaking or avoidance of congested spots that a one-dimensional transport path could not solve, by correcting the transport route information according to the congestion situation of transport tiles 401 that has been detected by the control drivers 301, 302, 303, and 304. Thus, the transport efficiency of the sample transport system 100 can be further improved.

Furthermore, if, among the preprocessing modules 601 and 602 and automatic analysis modules 603, 604, 605, and 606, at least some of them area a plurality of modules of identical specification configuration, the management section 101 treats them not as individual modules but as a module group as a group of modules of identical specification and thereby reduces the amount of data exchanged between the management section 101 and the control sections 201, 202, and 203 for transport route information, so the advantageous effect that the load can be reduced even if the scale of the system is larger can be produced.

### Third Embodiment

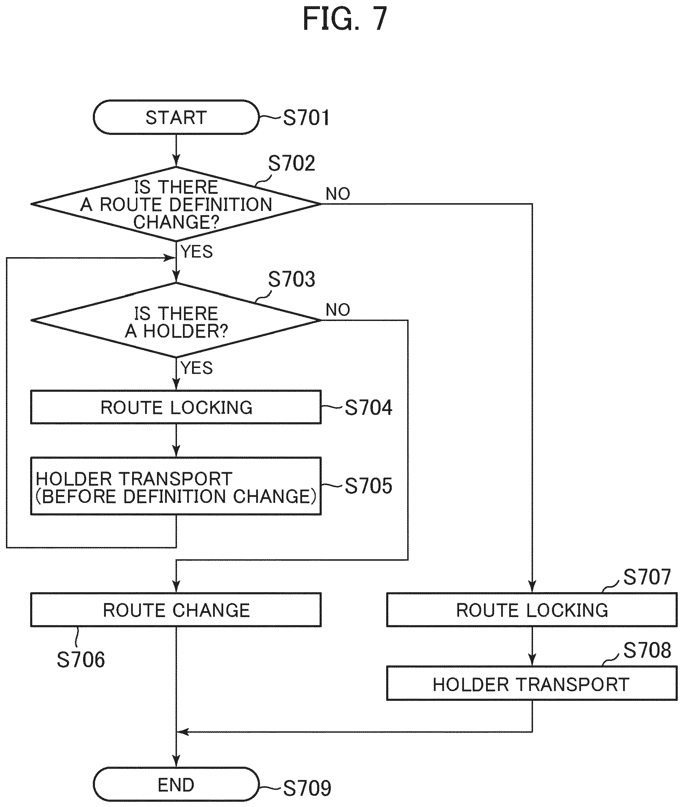

The sample transport system according to the third embodiment of the present invention will be described referring to FIG. 7. FIG. 7 is a processing flow for changing route definition information in the sample transport system according to the third embodiment of the present invention.

Basically, the route definition information 1 is changed before the sample transport system 100 is operated, such as at the startup of the management section 101 or at the time of resetting.

However, the specimen analysis result can be obtained more quickly by changing the destination or transport route for the holders 30 according to the congestion situation of holders 30 in the sample transport system 100 or the progress of processing by the preprocessing module 601 or 602 or the automatic analysis module 603, 604, 605 or 606.

In order to cope with such a case, the management section 101 in the sample transport system 100 according to this embodiment corrects the transport route information on the basis of the congestion situation of transport tiles 401 that has been detected by the control drivers 301, 302, 303, and 304.

Then, when the transport route information is corrected by the management section 101, the control sections 201, 202, and 203 maintain the transport route before correction if holders 30 exist on the route before correction, and correct the transport route after transport of all the holders 30 is finished. Next, the method for correction will be explained in detail referring to FIG. 7.

It is supposed that the management section 101 refers to the sample situation memory 2 that is periodically updated during operation and decides whether it is necessary to change the route definition or not. It is desirable to make this decision on the basis of the congestion situation of holders 30 in the sample transport system 100 or the progress of processing by the preprocessing module 601 or 602 or the automatic analysis module 603, 604, 605 or 606, as mentioned above.

If it is decided that it is necessary to change the route definition, the management section 101 changes the route definition and outputs the changed route definition to the control sections 201, 202, and 203. On the other hand, if it is decided that it is unnecessary to change the route definition, the management section 101 maintains the existing route information and outputs the route definition to the control sections 201, 202, and 203.

After start of operation (Step S701), the control sections 201, 202, and 203 decide whether the route definition currently in use has been changed or not (Step S702). If the control sections 201, 202, and 203 decide that the route definition has been changed, they make the process go to Step S703 or if they decide that the route definition has not been changed, they make the process go to Step S707.

If it is decided that the route definition currently in use has been changed, the control sections 201, 202, and 203 first decide whether or not there is a holder 30 being transported based on the previous transport definition, on the transport tiles 401 managed by the control sections 201, 202, and 203 respectively (Step S703). If it is decided that there is a holder 30, they make the process go to Step S704. On the other hand, if it is decided that there is no holder 30, they make the process go to Step S706.

If it is decided at Step 703 that there is a holder, the control sections 201, 202, and 203 lock the current transport route (Step S704) and continue transporting the holder 30 (Step S705). After that, they make the process go back to Step S703 to finish the transport of the holder 30 based on the previous route definition. At this time, it is desirable to perform preferential control to prevent a new holder 30 from being carried onto a position whose purpose of use is changed after definition change.

On the other hand, if it is decided at Step S703 that there is no holder 30, the control sections 201, 202, and 203 change the transport definition (Step S706) because there is no holder 30 on the changed route and starts transport control of a holder 30 along the transport route according to the new transport definition.

If it is decided at Step S702 that the route definition has not been changed, the control sections 201, 202, and 203 lock the current transport route (Step S707) in the same way as at Steps S704 and S705 and continue transporting the holder 30 (Step S708).

After that, the process is ended (Step S709).

The control sections 201, 202, and 203 refer to the route definition information 1 periodically during operation and carry out the above steps shown in FIG. 7.

The other elements and actions are almost the same as in the sample transport system 100 according to the first embodiment and details thereof are omitted.

The sample transport system according to the third embodiment of the present invention also produces almost the same advantageous effects as the sample transport system 100 according to the first embodiment.

In addition, when the management section 101 has corrected the transport route information, the control sections 201, 202, and 203 maintain the transport route before correction if there is a holder 30 on the route before correction, and correct the transport route after transport of all holders 30 is finished, so that the route definition can be dynamically changed and the transport route can be flexibly controlled, for example, by changing the amount of transport in the downstream or upstream direction by time of day or changing the route for circumvention in case of an error. Thus, the transport efficiency can be further improved.

### [Miscellaneous]

The present invention is not limited to the above embodiments but includes many variations. For example, the above embodiments have been described in detail for easy understanding of the present invention, but the present invention is not limited to a structure that includes all the elements described above.

Furthermore, an element of an embodiment may be replaced by an element of another embodiment or an element of an embodiment may be added to another embodiment. In each embodiment, addition of another element or deletion or replacement of an element can be made.

### Reference Signs List

1: Route definition information
2: Sample situation memory
11: Route definition information of one transport tile
12: Route definition information of one position
13: One definition column of route information definition in one position
14: Meaning of definition column of route information definition
15, 16, 17: Transport path
21: Sample situation of one transport tile
22: Sample situation of two positions
30: Holder (Carrier)
31: Sample tube
100: Sample transport system
101: Management section
201, 202, 203: Control section
201A, 202A, 203A: Cover range
301, 302, 303, 304: Control driver
401: Transport tile (transport unit)
402: Electromagnetic coil
411, 412, 413, 414, 415, 416, 417, 418, 419, 420, 421, 422,
423, 424, 425, 426: Transport tile
501, 503: Transport route area
502: Buffer definition area
504: Processing section definition area
601, 602: Preprocessing module
603, 604, 605, 606: Automatic analysis module
607: Analysis module
701, 702, 703, 704, 705, 706, 707, 708, 709: Processing flow at the time of changing route definition information

## Claims

1. A sample transport system transporting carriers (30)
equipped with sample tubes (31) in which specimens are contained, the sample transport system comprising:
a plurality of transport units (401-426) capable of moving the carriers in a two-dimensional direction in a plane;
a control section (201-203) managing action of the transport units (401-426);
a control driver (301-304) provided for each of the transport units (401-426) to drive the transport units (401-426) and to detect a situation of the transport units (401-426) ; and
a management section (101) integrally managing the sample transport system, wherein
the sample transport system is configured to plurally combine the transport units (401-426) and to be connectable to a preprocessing module (601,602) performing preprocessing before analysis for the specimens, a postprocessing module performing postprocessing for the specimens, or an analysis module (603-607) performing analysis of the specimens,
the control section (201-203) is connected between the management section (101) and a plurality of the control drivers (301-304),
the management section (101) generates transport route information on a destination of the carriers (30), based on the situation of the transport units (401-426) that has been detected by the control drivers (301-304), and
the control section (201-203) generates a transport route of each carrier (30) in the transport units (401-426) managed by the control drivers (301-304) connected, based on the transport route information and generates a command signal to the transport units to output the command signal to the control driver,
**characterized in that**
a plurality of said control sections (201-203) are provided each connected between the management section (101) and a plurality of the control drivers (301~304),
the transport units (401-426) each are a tile (401-426) capable of moving the carriers (30) in two-dimensional directions in a plane on the tile,
the management section (101) is configured to generate route definition information (1, 11) indicating for each position on each transport unit (401-426) the purpose of the position for a transport path, buffer or processing section and the speed and direction of carrier movement based on the situation of the transport units (401-426) indicating a congestion situation, and to output the defined information (1, 11) to the control sections (201-203), and
the control sections (201-203), after having received the route definition information (1, 11) from the management section (101), are configured to calculate which positions to be used for a route by each carrier (30), in consideration of the situation in the transport units (401-426) under their control and to give an instruction to the relevant control driver (301-304) to transport the carrier.

2. The sample transport system according to claim 1,
wherein the management section (101) corrects the transport route information based on a congesting situation of the transport units (401-426).

3. The sample transport system according to claim 1,
wherein in a case where at least any of the preprocessing module (601,602), the postprocessing module and the analysis module (603-607) is provided with a plurality of modules of identical specification-configuration, the management section (101) treats a destination of the transport route information as a module group into which modules of identical specification are made, and not as individual modules.

4. The sample transport system according to claim 2,
wherein when the transport route information from the management section (101) is corrected, the control section (201-203) maintains a transport route before correction in a case where the carriers (30) are present on a route before being corrected and corrects the transport route after transport of all the carriers is finished.

5. The sample transport system according to claim 1,
wherein an update cycle of a situation of the carriers (30) which is managed by the management section (101) is determined depending upon a transporting capability of the sample transport system.

6. The sample transport system according to claim 1,
wherein the transport route information that is exchanged between the management section (101) and the control section (201-203) comprises route information on low speed or stop for performing processing with respect to the test tubes by at least any of the preprocessing module (601-602), the postprocessing module, and the analysis module (603-607), in addition to route information on carrying-into and carrying-out of at least any of the preprocessing module, the postprocessing module, and the analysis module.

7. The sample transport system according to claim 1, wherein the transport units (401-426) each have a plurality of electromagnetic coils (402) capable of moving the carriers (30) in a two-dimensional direction in a plane.

8. The sample transport system according to claim 1, further comprising
a storage unit including a sample situation memory (2) storing the situations at the positions on each of the transport units (401-426) as detected by the control drivers (301-304),
wherein the situations at the positions of the transport units (401-426) are any of the following situations:
whether a carrier (30) is present or not at the position,
whether processing by an adjacent preprocessing module or analysis module for analyzing the specimen is in progress or not, or
whether there is an error or not at the position.

## Patentansprüche

1. Probentransportsystem, das Träger (30) transportiert, die mit Probenröhrchen (31) ausgestattet sind, in denen Proben enthalten sind, wobei das Probentransportsystem umfasst:
mehrere Transporteinheiten (401~426), die fähig sind, die Träger in einer zweidimensionalen Richtung in einer Ebene zu bewegen;
einen Steuerungsabschnitt (201~203), der die Aktion der Transporteinheiten (401~426) verwaltet;
einen Steuerungstreiber (301~304), der für jede der Transporteinheiten (401426) vorgesehen ist, um die Transporteinheiten (401~426) anzutreiben und eine Situation der Transporteinheiten (401~426) zu erfassen; und
einen Verwaltungsabschnitt (101), der das Probentransportsystem integral verwaltet, wobei
das Probentransportsystem dazu eingerichtet ist, die Transporteinheiten (401~426) mehrfach zu kombinieren und mit einem Vorverarbeitungsmodul (601, 602), das eine Vorverarbeitung vor der Analyse für die Proben durchführt, einem Nachbearbeitungsmodul, das eine Nachbearbeitung für die Proben durchführt, oder einem Analysemodul (603~607), das eine Analyse der Proben durchführt, verbunden werden zu können,
der Steuerungsabschnitt (201~203) zwischen dem Verwaltungsabschnitt (101) und mehreren der Steuerungstreiber (301~304) verbunden ist,
der Verwaltungsabschnitt (101) Transportweginformationen über ein Ziel der Träger (30) basierend auf der Situation der Transporteinheiten (401~426), die durch die Steuerungstreiber (301~304) erfasst worden ist, erzeugt und
der Steuerungsabschnitt (201~203) einen Transportweg jedes Trägers (30) in den Transporteinheiten (401~426), die durch die verbundenen Steuerungstreiber (301~304) verwaltet werden, basierend auf den Transportweginformationen erzeugt und ein Befehlssignal an die Transporteinheiten erzeugt, um das Befehlssignal an den Steuerungstreiber auszugeben,
**gekennzeichnet dadurch, dass**
mehrere Steuerungsabschnitte (201~203) vorgesehen ist, die jeweils zwischen dem Verwaltungsabschnitt (101) und mehreren der Steuerungstreiber (301~304) verbunden sind,
die Transporteinheiten (401~426) jeweils eine Platte (401~426) sind, die fähig ist, die Träger (30) in zweidimensionalen Richtungen in einer Ebene auf der Platte zu bewegen,
der Verwaltungsabschnitt (101) dazu eingerichtet ist, Wegdefinitionsinformationen (1, 11) zu erzeugen, die für jede Position auf jeder Transporteinheit (401~426) den Zweck der Position für einen Transportweg, einen Puffer oder einen Verarbeitungsabschnitt und die Geschwindigkeit und Richtung der Trägerbewegung angeben, basierend auf der Situation der Transporteinheiten (401~426), die eine Überlastungssituation anzeigt, und die definierten Informationen (1, 11) an die Steuerungsabschnitte (201~203) auszugeben, und
die Steuerungsabschnitte (201~203), nachdem sie die Wegdefinitionsinformationen (1, 11) vom Verwaltungsabschnitt (101) empfangen haben, dazu eingerichtet sind, zu berechnen, welche Positionen für einen Weg durch jeden Träger (30) zu verwenden sind, unter Berücksichtigung der Situation in den Transporteinheiten (401426) unter ihrer Kontrolle, und eine Anweisung an den relevanten Steuerungstreiber (301~304) zu geben, den Träger zu transportieren.

2. Probentransportsystem nach Anspruch 1,
wobei der Verwaltungsabschnitt (101) die Transportweginformationen basierend auf einer Überlastungssituation der Transporteinheiten (401~426) korrigiert.

3. Probentransportsystem nach Anspruch 1,
wobei in einem Fall, in dem mindestens eines des Vorverarbeitungsmoduls (601, 602), des Nachbearbeitungsmodus und des Analysemoduls (603~607) mit mehreren Modulen identischer Spezifikationskonfiguration versehen ist, der Verwaltungsabschnitt (101) ein Ziel der Transportweginformationen als eine Modulgruppe, in die Module identischer Spezifikation aufgenommen sind, und nicht als einzelne Module behandelt.

4. Probentransportsystem nach Anspruch 2,
wobei, wenn die Transportweginformationen vom Verwaltungsabschnitt (101) korrigiert werden, der Steuerungsabschnitt (201~203) einen Transportweg vor der Korrektur in einem Fall aufrechterhält, in dem die Träger (30) auf einem Weg vorhanden sind, bevor dieser korrigiert wird, und den Transportweg korrigiert, nachdem der Transport aller Träger beendet ist.

5. Probentransportsystem nach Anspruch 1,
wobei ein Aktualisierungszyklus einer Situation der Träger (30), die durch den Verwaltungsabschnitt (101) verwaltet wird, in Abhängigkeit von einer Transportfähigkeit des Probentransportsystems bestimmt wird.

6. Probentransportsystem nach Anspruch 1,
wobei die Transportweginformationen, die zwischen dem Verwaltungsabschnitt (101) und dem Steuerungsabschnitt (201~203) ausgetauscht werden, Weginformationen über niedrige Geschwindigkeit oder Stopp zum Durchführen einer Verarbeitung in Bezug auf die Teströhrchen durch mindestens eines des Vorverarbeitungsmoduls (601~602), des Nachbearbeitungsmoduls und des Analysemoduls (603~607), zusätzlich zu Weginformationen über das Hineintragen und Heraustragen von mindestens einem des Vorverarbeitungsmodus, des Nachbearbeitungsmoduls und des Analysemoduls, umfassen.

7. Probentransportsystem nach Anspruch 1, wobei die Transporteinheiten (401~426) jeweils mehrere elektromagnetische Spulen (402) aufweisen, die fähig sind, die Träger (30) in einer zweidimensionalen Richtung in einer Ebene zu bewegen.

8. Probentransportsystem nach Anspruch 1, ferner umfassend
eine Speichereinheit, die einen Probensituationsspeicher (2) beinhaltet, der die Situationen an den Positionen auf jeder der Transporteinheiten (401~426) speichert, wie sie durch die Steuerungstreiber (301~304) erfasst werden,
wobei die Situationen an den Positionen der Transporteinheiten (401~426) irgendwelche der folgenden Situationen sind:
ob ein Träger (30) an der Position vorhanden ist oder nicht,
ob eine Verarbeitung durch ein benachbartes Vorverarbeitungsmodul oder Analysemodul zur Analyse der Probe im Gange ist oder nicht, oder
ob an der Position ein Fehler vorliegt oder nicht.

## Revendications

1. Système de transport d'échantillons transportant des supports (30) équipés avec des tubes (31) pour échantillon dans lesquels des échantillons sont contenus, le système de transport d'échantillons comprenant :
une pluralité d'unités (401~426) de transport aptes à déplacer les supports dans un sens bidimensionnel dans un plan ;
une section (201~203) de commande gérant une action des unités (401~426) de transport ;
un mécanisme (301~304) d'entraînement de commande prévu pour chacune des unités (401~426) de transport pour entraîner les unités (401~426) de transport et pour détecter une situation des unités (401~426) de transport ; et
une section (101) de gestion gérant intégralement le système de transport d'échantillons, dans lequel
le système de transport d'échantillons est configuré pour combiner de façon multiple les unités (401~426) de transport et pour être connectable à un module (601, 602) de prétraitement exécutant un prétraitement avant analyse pour les échantillons, un module de post-traitement exécutant un post-traitement pour les échantillons, ou un module (603~607) d'analyse exécutant une analyse des échantillons,
la section (201~203) de commande est connectée entre la section (101) de gestion et une pluralité des mécanismes (301~304) d'entraînement de commande,
la section (101) de gestion génère des informations de trajet de transport sur une destination des supports (30), sur la base de la situation des unités (401~426) de transport qui a été détectée par les mécanismes (301~304) d'entraînement de commande, et
la section (201~203) de commande génère un trajet de transport de chaque support (30) dans les unités (401~426) de transport gérées par les mécanismes (301~304) d'entraînement de commande connectés, sur la base des informations de trajet de transport et génère un signal de commande pour que les unités de transport délivrent en sortie le signal de commande pour le mécanisme d'entraînement de commande,
**caractérisé en ce que**
une pluralité desdites sections (201~203) de commande sont chacune prévues connectées entre la section (101) de gestion et une pluralité des mécanismes (301~304) d'entraînement de commande,
les unités (401~426) de transport sont chacune un carreau (401~426) apte à déplacer les supports (30) dans des sens bidirectionnels dans un plan sur le carreau,
la section (101) de gestion est configurée pour générer des informations (1, 11) de définition de trajet indiquant pour chaque position sur chaque unité (401~426) de transport le but de la position pour un chemin de transport, une section tampon ou de traitement et la vitesse et le sens de mouvement de support sur la base de la situation des unités (401~426) de transport indiquant une situation de congestion, et pour délivrer en sortie les informations (1, 11) définies pour les sections (201~203) de commande, et
les sections (201~203) de commande, après avoir reçu les informations (1, 11) de définition de trajet depuis la section (101) de gestion, sont configurées pour calculer quelles positions utiliser pour un trajet par chaque support (30), en considération de la situation dans les unités (401~426) de transport sous leur contrôle et pour donner une instruction au mécanisme (301~304) d'entraînement de commande concerné pour transporter le support.

2. Système de transport d'échantillons selon la revendication 1,
dans lequel la section (101) de gestion corrige les informations de trajet de transport sur la base d'une situation de congestion des unités (401~426) de transport.

3. Système de transport d'échantillons selon la revendication 1,
dans lequel, dans un cas où au moins l'un quelconque parmi le module (601, 602) de prétraitement, le module de post-traitement et le module (603~607) d'analyse est prévu avec une pluralité de modules de spécification-configuration identiques, la section (101) de gestion traite une destination des informations de trajet de transport comme un groupe de modules parmi lesquels des modules de spécification identique sont constitués, et non comme des modules individuels.

4. Système de transport d'échantillons selon la revendication 2,
dans lequel, lorsque les informations de trajet de transport provenant de la section (101) de gestion sont corrigées, la section (201~203) de commande maintient un trajet de transport avant correction dans un cas où les supports (30) sont présents sur un trajet avant qu'il ne soit corrigé et corrige le trajet de transport après que le transport de tous les supports est terminé.

5. Système de transport d'échantillons selon la revendication 1,
dans lequel un cycle de mise à jour d'une situation des supports (30) qui est géré par la section (101) de gestion est déterminé en fonction d'une capacité de transport du système de transport d'échantillons.

6. Système de transport d'échantillons selon la revendication 1,
dans lequel les informations de trajet de transport qui sont échangées entre la section (101) de gestion et la section (201~203) de commande comprennent des informations de trajet à basse vitesse ou d'arrêt pour exécuter un traitement en ce qui concerne les tubes à essai par au moins l'un quelconque parmi le module (601, 602) de prétraitement, le module de post-traitement, et le module (603~607) d'analyse, en plus d'informations de trajet sur l'entrée et la sortie d'au moins l'un quelconque parmi le module de prétraitement, le module de post-traitement, et le module d'analyse.

7. Système de transport d'échantillons selon la revendication 1, dans lequel les unités (401~426) de transport ont chacune une pluralité de bobines électromagnétiques (402) aptes à déplacer les supports (30) dans un sens bidimensionnel dans un plan.

8. Système de transport d'échantillons selon la revendication 1, comprenant en outre
une unité de stockage incluant une mémoire (2) de situations d'échantillons stockant les situations aux positions sur chacune des unités (401~426) de transport telles que détectées par les mécanismes (301~304) d'entraînement de commande,
dans lequel les situations aux positions des unités (401~426) de transport sont l'une quelconque parmi les situations suivantes :
si un support (30) est présent ou non à la position,
si un traitement par un module de prétraitement ou un module d'analyse adjacent pour analyser l'échantillon est en cours ou non, ou
s'il y a une erreur ou non à la position.
